# FASCICULE DE BREVET EUROPEEN

(11) **EP 1 682 464 B1**
(45) Date de publication et mention de la délivrance du brevet: **05.01.2011**
(21) Numéro de dépôt: 04791544.2
(22) Date de dépôt: 15.10.2004
(51) Int. Cl.: C05F 7/00, C02F 11/00

(54) **PROCEDE DE PRODUCTION D'UNE MATIERE GRANULEE**
VERFAHREN ZUR HERSTELLUNG EINER GRANULATFÖRMIGEN SUBSTANZ
METHOD FOR PRODUCTION OF A GRANULATED MATERIAL

(30) Priorité: 06.11.2003 FR 0313035
(43) Date de publication de la demande: 26.07.2006
(73) Titulaire: S.A. SEM STONE, 75008 Paris (FR); Bensaid, Serge, 84400 Apt (FR); Camp, Jean-Pierre, 75007 Paris (FR)
(72) Inventeur: Camp ,Jean Pierre, 75007 Paris (FR); Bensaid, Serge, 84400 Apt (FR)
(74) Mandataire: Eidelsberg, Victor Albert
(86) Numéro de dépôt international: PCT/FR2004/002633
(87) Numéro de publication internationale: WO 2005/047214

(56) Documents cités:
- EP-A- 0 156 244
- EP-A- 0 560 423
- EP-A- 0 564 857
- PATENT ABSTRACTS OF JAPAN vol. 0162, no. 28 (C-0944), 27 mai 1992 (1992-05-27) & JP 04 045899 A (MIZUSHIYORI KAIHATSU KK), 14 février 1992 (1992-02-14) -& DATABASE WPI Section Ch, Week 199213 Derwent Publications Ltd., London, GB; Class D15, AN 1992-102025 XP002285474 & JP 04 045899 A (MIZUSYORI KAIHATSU) 14 février 1992 (1992-02-14)

## Description

La présente invention se rapporte aux procédés de production d'une matière granulée s'écoulant librement et aux produits obtenus et, plus particulièrement, à des procédés de production permettant de valoriser les boues issues du traitement biologique des eaux résiduaires urbaines et industrielles.

Le traitement biologique des eaux résiduaires, urbaines et industrielles engendrent de grandes quantités de boue que l'on a mis pendant longtemps à l'épandage et qui, comme celui-ci est maintenant interdit, sont mises à la décharge.

L'invention vise à transformer ces boues en un produit de valeur pouvant être utilisé notamment comme substrat de culture.

Le procédé suivant l'invention de production d'une matière granulée s'écoulant librement est caractérisé en ce que l'on passe au crible de la ponce pour obtenir de la ponce à une dimension supérieure à 500 microns et inférieure à 15 mm. On met la ponce passée au crible en contact avec au moins 20 % de son poids d'eau et on agite, puis on sépare de la ponce épurée de l'eau et on la sèche. On mélange une partie en poids de boue issue du traitement biologique d'eaux résiduaires urbaines ou industrielles à 0,5 à 0,9 partie en poids de ponce séchée jusqu'à obtention de granulés.

Grâce à la présence de la ponce à pores ouverts et comme le montre la composition analytique des boues traitées et les résultats de tests de cinétique de minéralisation et les essais en vase de végétation, les boues sont stabilisées, la plus grande partie de l'azote organique des boues est immobilisée provisoirement et en conséquence les dangers de lixiviation des formes solubles de l'azote (notamment forme ammoniacale) sont beaucoup limités. Les effets obtenus se rapprochent de ceux procurés par le compostage des boues, mais le traitement suivant l'invention s'effectue immédiatement alors que le compostage demande plusieurs mois. La minéralisation ralentie de l'azote réduit certes la valeur fertilisante des boues ainsi traitées. Mais en contrepartie, les propriétés physiques des boues ont pour effet une amélioration sensible de la capacité de rétention en eau et de la structure physique du sol dans lequel elles sont incorporées. La ponce suivant l'invention est en mesure d'absorber environ de 40 à 60 litres d'eau par m³ de l'ensemble de la ponce et de la boue. Elle peut donc retenir directement de la boue ayant de 75 à 90% en volume d'eau. Il n'est plus nécessaire de traiter thermiquement la boue ou il suffit de la concentrer bien moins, alors que le produit du EP-A-0 156 244 dans lequel on n'enlève pas le basalte et les fines par lavage, ne peut, suivant des essais effectués par les demandeurs, absorber que 290 litres d'eau par m3. De même, l'expérience effectuée avec de la boue à 13% de produit sec et de la fine de ponce entre 100 et 500 microns permet de constater une agglomération type mortier sec préjudiciable voire rendant impossible la granulation souhaitée.

Le premier stade du procédé suivant l'invention consiste à passer au crible de la ponce pour retenir des grains d'une dimension supérieure à 500 microns et inférieure ou égale à 15 mm.

Le deuxième stade du procédé suivant l'invention consiste à mettre la ponce en présence d'eau. On met la ponce en présence d'au moins 20 % en poids d'eau et on agite. Ce stade a essentiellement pour but de débarrasser la ponce des fines, du basalte, de la magnétite et des cendres volcaniques qui en encombrent les pores. Un procédé particulièrement préféré pour effectuer ce lavage avec séparation des substances indésirables consiste à projeter des jets d'eau à travers un tamis sur lequel est déposée la ponce. Les jets soulèvent les grains de ponce, pénètrent dans les pores, les débarrassent des impuretés qui retombent et passent à travers le tamis ce qui assure la séparation de la ponce épurée. On sèche ensuite cette ponce dans un séchoir, par exemple dans un séchoir à courant d'air chaud, par exemple entre 200 et 250° C, jusqu'à ce que la teneur en eau de la ponce soit inférieure ou égale à 10 %.en poids.

Le stade suivant du procédé consiste à mélanger la ponce séchée à des boues issues du traitement biologique d'eaux résiduaires urbaines ou industrielles jusqu'à obtention de granulés.

Par traitement biologique, on entend l'un des traitements suivants :
Les techniques les plus développées au niveau des stations d'épuration urbaines et industrielles sont des procédés biologiques intensifs.
Le principe de ces procédés est de localiser sur des surfaces réduites et d'intensifier les phénomènes de transformation et de destruction des matières organiques que l'on peut observer dans le milieu naturel.

Trois grands types de procédés sont utilisés :
- les lits bactériens et disques biologiques,
- les boues activées,
- les techniques de biofiltration ou filtration biologique accélérée.

### Lit bactérien

Le principe de fonctionnement d'un lit bactérien consiste à faire ruisseler les eaux usées, préalablement décantées sur une masse de matériaux poreux ou caverneux qui sert de support aux micro-organismes (bactéries) épurateurs. Une aération est pratiquée soit par tirage naturel soit par ventilation forcée. Il s'agit d'apporter l'oxygène nécessaire au maintien des bactéries aérobies en bon état de fonctionnement. Les matières polluantes contenues dans l'eau et l'oxygène diffusent, à contre-courant, à travers le film biologique jusqu'aux micro-organismes assimilateurs. Le film biologique comporte des bactéries aérobies à la surface et des bactéries aérobies près du fond. Les sous-produits et le gaz carbonique produits par l'épuration s'évacuent dans les fluides liquides et gazeux.

### Disques biologiques

Une autre technique faisant appel aux cultures fixées est constituée par les disques biologiques tournants. Les micro-organismes se développent dessus et forment un film biologique épurateur à la surface des disques. Les disques étant semi-immergés, leur rotation lente permet l'oxygénation de la biomasse fixée.

D'autres procédés à culture fixée tels que les bio-filtres sont également utilisés.

### Boues activées

Le procédé "boues activées" consiste à mélanger des eaux usées brutes avec des boues activées liquides, bactériologiquement très actives. La dégradation aérobie de la pollution s'effectue par mélange intime des micro-organisme épurateurs et de l'effluent à traiter. Ensuite, les phases "eaux épurées" et "boues dépuratrices" sont séparées.

Les trois procédés produisent des boues qui doivent être évacuées. Ce sont celles-ci qui sont utitisées dans le procédé.

Le mélange des boues issues du traitement biologique d'eaux résiduaires urbaines ou industrielles et de la ponce peut s'effectuer par tout mélangeur habituel notamment par un mélangeur à ruban, par un mélangeur à couteau, à hélice, à vis inversée, etc... On a obtenu de bons résultats avec une durée de mélange aussi petite que 2 minutes.

Suivant un perfectionnement, on mélange en même temps que la ponce et les boues de l'argile, à raison de 5 à 12 % en poids du mélange total. Cela permet de supprimer les mauvaises odeurs, notamment lorsque les argiles sont à forte capacité d'échange cationique.

On préfère aussi utiliser un rétenteur d'eau, notamment du polysilicate de potassium, à raison de moins de 1 ‰ en poids de manière à retenir encore mieux l'eau à l'intérieur des pores des grains.

On obtient ainsi une matière en grains dont la plus grande dimension va de 0,1 à 15 mm, s'écoulant librement que l'on peut mettre en fût ou en sac à la sortie du mélangeur et livrée et manipulée facilement d'autant plus qu'elle est inodore.

Cette matière en grains s'écoulant librement a une teneur en eau de 45 à 60 %, une teneur en Si exprimée en SiO₂ de 22 à 25 %, une teneur en Al exprimée en Al₂O₃ de 6 à 9 %, une teneur en carbone de 4 à 5 % et une teneur en matières organiques telles que déterminées par la perte au feu de 1 à 3 %. D'autres impuretés ou éléments secondaires sous forme de traces telles que du phosphore, du potassium, du magnésium, du calcium peuvent être aussi présents.

Les caractéristiques agronomiques de la matière en grains, suivant l'invention permettent son emploi comme amendement organique dans divers types d'usages agricoles (cultures pérennes, ou grandes cultures) ou paysagers (aménagement de sites). Dans des terres sensibles à la sécheresse, la matière suivant l'invention améliore l'implantation des cultures. Son utilisation en tant que constituant d'un support de culture hors sol(substrat de cultures et conteneurs en pépinières ornementales, par exemple) donnent aussi de bons résultats.

L'exemple suivant illustre l'invention.

On prend un mètre cube de boues issues d'une station de traitement biologique des eaux résiduaires urbaines, soit environ 1 tonne. La composition de cette boue :

| | Pourcentage (en g/100 g de boue brute) | Méthode d'analyse |
|---|---|---|
| Eau | 89,3 | Séchage par dessicateur |
| Matière sèche | 10,7 | NFU 44 171 |
| Matière organique | 7,9 | NFU 44 160 |
| Carbone | 3,9 | NFU 44 160 |
| Azote total | 0,75 | Analyseur élémentaire |
| N/NO₃ | 0,0001 | Distillation directe |
| N/NH₄ | 0,12 | Méthode GRIESS |
| P₂O₅ | 0,07 | Eau régale dosage ICP |
| K₂O | 0,012 | Eau régale |
| MgO | 0,009 | Eau dosage ICP |
| CaO | 0,0075 | Eau régale dosage ICP |
| CI des chlorures | 0,01 | Dir 87/94 CEE 6 |

On prend de la ponce criblée (0,5 + à 15 mm), traitée, épurée et séchée. La ponce a été d'abord lavée par des jets d'eau pour séparer les fines, la magnétite et les cendres volcaniques qui sont présentes dans les alvéoles. Le séchage a été fait à l'air chaud dans un four tournant alimenté par un brûleur à gaz de façon à sécher la ponce à 90 % de sa teneur en eau.

Cette ponce est composée de :
Si (comme SiO₂) : 70 %
Al (comme Al₂O₃₎ : 13%
Ti, Fe, Mg, Ca, Na, K₂O, P₂O₅, CaO, SO₃, H₂O : 17 %.

On mélange le mètre cube de boue avec 700 kg de ponce et d'argiles ayant un fort pouvoir CEC (capacité d'échange cationique) plus un kg d'hydrorétenteur d'eau.

Le mélange est fait dans un mélangeur à rubans, d'une capacité de 3 000 litres et il dure deux minutes.

Le produit à la sortie est composé de grains encore humides, mais s'écoulant librement et facilement mis en sacs ou conteneurs.

Du mètre cube de boues ayant une siccité de 11 % (plus ou moins liquide) au départ, on arrive à un substrat en grains pour un volume d'un 1 m³ 200.

La composition de ce substrat en grains de granulométrie de 0,5 + à 15 mm est la suivante :

| | Pourcentage (en g/100 g de substrat) | Méthode d'analyse |
|---|---|---|
| Eau | 54 | Séchage - dessicateur |
| Si en SiO₂ | 41,20 | Rayons X |
| Matière organique | 3,0 | NFU 44 160 |
| Carbone | 1,48 | NFU 44 160 |
| Al en Al₂O₃ | 5,3 | Rayons X |
| Azote total | 0,03 | Analyseur élémentaire |
| N/NHO₃ | O,0024 | Distillation directe |
| N/NH₄ | <0,004 | Méthode de GRIESS |
| P₂O₅ | <0,008 | Eau régale dosage ICP |
| K₂O | 0,058 | Eau régale |
| MgO | 0,16 | Eau régale dosage ICP |
| CaO | 0,64 | Eau régale dosage ICP |
| CI des chlorures | <0,015 | Dir 87/94 CEE 6 |

| | | |
|---|---|---|
| NFU signifie norme française d'utilisation. ICP signifie dosage au spectromètre de masse. | | |

## Revendications

1. Procédé de production d'une matière granulée s'écoulant librement, **caractérisé en ce que** l'on passe au crible de la ponce pour obtenir de la ponce ayant une dimension supérieure à 500 microns et inférieure ou égal à 15 mm, on met la ponce en présence d'eau tout en agitant, on sépare la ponce de l'eau et on la sèche pour obtenir de la ponce séchée, puis on mélange une partie en poids de boue issue du traitement biologique d'eaux résiduaires urbaines ou industrielles à 0,5 à 0,9 partie en poids de ponce séchée jusqu'à obtention de granulés.

2. Procédé suivant la revendication 1, **caractérisé en ce que** l'on ajoute au malaxage de 5 à 12 % en poids d'argile par rapport au mélange total.

3. Procédé suivant la revendication 1 ou 2, **caractérisé en ce que** l'on ajoute au malaxage jusqu'à 1 ‰ en poids de rétenteur d'eau.

4. Procédé suivant la revendication 1, 2 ou 3, **caractérisé en ce que** l'on met la ponce en présence d'eau en projetant des jets d'eau à travers un tamis sur lequel est déposé la ponce.

5. L'utilisation de la matière obtenue par les procédés revendications 1 à 4, comme substrat de culture.

## Claims

1. A method for producing a free-flowing granular material, **characterized in that** pumice is screened to obtain pumice having a size of greater than 500 microns and less than or equal to 15 mm, the pumice is placed in the presence of water with stirring, the pumice is separated from the water and dried to obtain dried pumice, one part by weight of sludge issuing from the biological treatment of municipal or industrial wastewater is mixed with 0.5 to 0.9 part by weight of dried pumice until granules are obtained.

2. The method as claimed in claim 1, **characterized in that** 5 to 12 % by weight of clay with respect to the total mixture is added while mixing.

3. The method as claimed in either of claims 1 or 2, **characterized in that** up to 1% by weight of water retainer is added while mixing.

4. The method as claimed in claim 1, 2 or 3, **characterized in that** the pumice is placed in the presence of water by spraying water jets through a screen on which the pumice is deposited.

5. The use of the material obtained by the methods as claimed in claims 1-4 as a culture substrate.

## Patentansprüche

1. Verfahren zum Herstellen eines fließfähigen granulierten Materials, **dadurch gekennzeichnet, dass** Bims gesiebt wird, um Bims mit einer Abmessung größer als 500 Mikrometer und kleiner oder gleich 15 mm zu erhalten, der Bims mit Wasser in Verbindung gebracht und dabei gerührt wird, der Bims vom Wasser getrennt wird und getrocknet wird zum Erhalten von getrocknetem Bims, worauf ein Gewichtsanteil von aus der biologischen Behandlung von städtischen oder industriellen Abwässern stammendem Bodensatz mit 0,5 bis 0,9 Gewichtsanteilen von getrocknetem Bims bis zum Erhalt von Granulat gemischt wird.

2. Verfahren nach Anspruch 1, **dadurch gekennzeichnet, dass** beim Rühren 5 bis 12 Gewichts-Prozent Ton bezogen auf das Gesamtgemisch hinzugefügt wird.

3. Verfahren nach Anspruch 1 oder 2, **dadurch gekennzeichnet, dass** beim Rühren bis zu 1 Gewichts-Promille Wasser-Rückhaltemittel hinzugefügt wird.

4. Verfahren nach Anspruch 1, 2 oder 3, **dadurch gekennzeichnet, dass** der Bims mit Wasser in Verbindung gebracht wird durch Ausrichten von Wasserstrahlen durch ein Sieb, auf welchem der Bims angeordnet ist.

5. Verwendung von dem nach dem Verfahren der Ansprüche 1 bis 4 erhaltenen Material als Kultursubstrat.
